# EUROPEAN PATENT SPECIFICATION

(11) **EP 3 899 506 B1**
(45) Date of publication and mention of the grant of the patent: **18.02.2026**
(21) Application number: 19845912.5
(22) Date of filing: 09.12.2019
(51) Int. Cl.: G01N 21/952, G01N 21/954, G01N 21/88, G01N 21/95, G01B 11/25, B60C 25/00, B60C 25/05

(54) **METHOD AND STATION FOR CHECKING TYRES**
VERFAHREN UND STATION ZUR KONTROLLE VON REIFEN
PROCÉDÉ ET STATION DE VÉRIFICATION DES PNEUS

(30) Priority: 20.12.2018 IT 201800020533
(43) Date of publication of application: 27.10.2021
(73) Proprietor: Pirelli Tyre S.p.A., 20126 Milano (IT)
(72) Inventor: BOFFA, Vincenzo, 20900 Monza (IT); DE COL, Christian, 23807 Merate (IT); HELD, Alessandro, 20126 Milano (IT)
(74) Representative: Tirloni, Bartolomeo
(86) International application number: PCT/IT2019/050259
(87) International publication number: WO 2020/129100

(56) References cited:
- EP-A1- 3 106 860
- WO-A1-2017/175099
- WO-A2-2016/088040
- US-A1- 2016 377 556
- US-A1- 2018 328 819
- US-B1- 6 840 097
- US-B2- 10 121 238
- US-B2- 8 614 740

## Description

### Technical field of the invention

The present invention relates to a method and a station for checking tyres in a tyre production line, in particular by acquisition of three-dimensional images of the inner and outer surface of a tyre and further processing thereof, for example for detecting the possible presence of detectable defects on the surface of a tyre.

### Definitions

"Tyre" typically means the finished tyre, i.e. after the building, moulding and vulcanisation steps, but possibly also the green tyre after the building step and before the moulding and/or vulcanisation steps.

"Crown portion" means the tyre portion placed between the two sidewalls of the tyre, i.e. at the position of the tread band.

"Sidewall" means one of the two tyre portions reciprocally facing and developing substantially radially from opposite sides of the crown portion up to the beads. "Shoulder" means each tyre portion of connection between the crown portion and the respective sidewall (in other words, the two shoulders are located at the two, radially and axially outer circular 'edges' of the tyre).

"Outer surface" and "inner surface" of the tyre mean respectively the surface which remains visible after the coupling of the tyre with the mounting rim thereof and the one no longer visible after said coupling.

"Inner cavity" means the space delimited by the inner surface of the tyre and by the surface of the rim which faces the inner surface of the tyre, when mounted.

"Cycle time" within a production line comprising at least one work station, preferably a plurality of work stations, and inserted in a plant for the tyres production means, at full speed, the maximum transit time for a tyre being processed to pass through a work station in which at least a portion of a component of the tyre itself is built. For example, the cycle time may be comprised between about 20 and about 120 seconds.

By 'perpendicular' with respect to geometric elements (such as straight lines, planes, surfaces, etc.) it is meant that these elements (or elements parallel to them and incident to each other) form an angle of 90°+/-15°, preferably 90°+/-10°.

By 'parallel' with respect to the aforesaid geometric elements it is meant that these elements (or elements parallel to them and incident to each other) form an angle of 0°+/-15°, preferably 0°+/-10°.

The terms 'optical', 'light' and the like refer to a used electromagnetic radiation that has at least a portion of the spectrum falling in a widened neighbourhood of the optical band, and not necessarily strictly falling within the optical band (i.e. 400-700 nm), for example this widened neighbourhood of the optical band may range from the ultraviolet to the infrared (for example, with a wavelength comprised between about 100 nm and about 1 µm).

By "digital image", or equivalently "image", it is generally meant a set of data, typically contained in a computer file, in which each tuple of coordinates (typically each pair of coordinates) of a finite set (typically two-dimensional and matrix, i.e. N rows x M columns) of tuples of spatial coordinates (each tuple corresponding to a pixel) is associated with a corresponding set of numerical values (which may be representative of different magnitudes). For example, in monochrome images (such as those in grey levels or 'greyscale'), such a set of values consists of a single value in a finite scale (typically 256 levels or tones), this value for example being representative of the luminosity (or intensity) level of the respective tuple of spatial coordinates when displayed. A further example is represented by colour images, in which the set of values represents the luminosity level of a plurality of colours or channels, typically the primary colours (for example red, green and blue in RGB coding and cyan, magenta, yellow and black in CMYK coding). The term 'image' does not necessarily imply the actual display of the same.

Any reference to a specific "digital image" (for example, the digital image initially acquired on the tyre) more generally includes any digital image obtainable through one or more digital processing of said specific digital image (such as, for example, filtering, equalization, smoothing, binarization, thresholding, morphological transformations (opening, etc.), derivative or integral calculations, etc.).

"High definition image" means an image having a resolution less than or equal to 10 microns.

The term "two-dimensional image" or "2D" of a surface means a digital image each pixel of which is associated to an information representative of the reflectivity/diffusivity and/or of the colour of the surface, such as the images detected from the common cameras or digital cameras (e.g. CCD).

The term "three-dimensional image" or "3D" of a surface denotes a digital image each pixel of which is associated to a surface height information.

"Digital camera" or in short "camera" denotes an optoelectronic device suitable to acquire a digital image and comprising a digital image sensor (or in short 'sensor'), which defines an image plane, and a camera lens (which is assumed with cylindrical symmetry, although the invention is not limited only to these camera lenses).

'Sensor' means a set of photosensitive elements (called 'pixels') capable of transforming the incident light into an electric signal, for example by CCD or CMOS technology. The term pixel is used to denote both the single photosensitive element of the sensor, and the single element forming the digital image as defined above.

"Matrix camera" means a camera which its sensor has the pixels arranged according to a rectangular matrix having the two dimensions of comparable length (for example the two dimensions differs of less than an order of magnitude, such as in the format 16x9, 4x3 or 3x2). Typically, the matrix diagonal of the sensor is some tens of millimetres long. By extension "matrix image" is a digital image acquired by a matrix camera.

"Optical axis" of a camera lens means the line along which exists a rotation symmetry of the camera lens.

"Linear laser source" means a laser source able to emit linear laser beam, i.e. a laser beam lying on a "propagation plane" and having as propagation direction a "propagation axis", belonging to the propagation plane and passing through the laser source. An intersection of the linear laser beam with a physical surface with reflecting/diffusive properties, such as the surface of tyre generates a 'laser line'.

A 'reflected laser line' is defined as the image of said laser line on the surface in an image acquired by a matrix camera.

"Linear portion of surface " means a portion of surface having a dimension much greater than the other dimension perpendicular to it, typically greater than at least two orders of magnitude. The smaller dimension of the linear portion of surface is typically less than or equal to 0.1 mm.

"Reflecting surface" of a reflecting element means both a real reflecting surface, as in the case of a mirror, and an equivalent reflecting surface, as in the case of a reflecting prism that uses at least one internal reflection (by total reflection or by mirror processing of at least one inner face) or a refracting prism that diverts the light by refraction. In fact, the prism can be modelled with an equivalent reflecting surface, which behaves in reflection like the prism (for a given wavelength of the laser).

With the terms "low", "high", "below" and "above" it is identified the relative position of an element, such as for example a component of a tyre, a tyre, an apparatus, a device, etc., with respect to the ground during the use or of one of said elements with respect to another element.

### State of the art

Typically, a tyre has a substantially toroidal structure around a rotation axis thereof during the operation, and has an axial middle plane perpendicular to the rotation axis, said axial middle plane typically being a plane of (substantial) geometric symmetry (e.g. neglecting possible minor asymmetries, such as the tread pattern and/or the inner structure).

In the context of the production and building processes of tyres for vehicle wheels, it is feel the need to carry out quality checks on the produced products, in order to avoid that faulty tyres or anyway tyres outside of the design specifications can be put into trade, and/or to progressively adjust the apparatuses and the machinery used, to improve and optimize the execution of the operations carried out in the production process.

WO 2017/175099 A1 discloses an apparatus for the check of tyres comprising an acquisition system of three-dimensional images of the surface of the tyre, the acquisition system comprising a matrix camera, a linear laser source, and a reflecting surface that crosses the propagation axis of the linear laser beam and the optical axis of the matrix camera.

WO2016/088040 A1 describes an apparatus and a method for checking tyres. The apparatus comprises a first control unit comprising a plurality of control tools, a second control unit comprising a plurality of control tools and a tilting and transport device operatively interposed between the first and the second control unit. The first control unit, the second control unit and the tilting and transport device define a control path crossed by steps by each tyre. The first control unit and the second control unit comprise the same control tools configured to perform the same checks on respective axial halves of the tyres. The tilting and transport device is configured to tilt the tyre about a tilting axis perpendicular to a main rotation axis of the tyre and belonging to an axial middle plane thereof.

US 2016/377556 A1 discloses a method and an apparatus for controlling tyres.

EP 3 106 860 A1 discloses a method and a device for imaging the inner surface of a tyre.

### Summary of the invention

In the field of tyres quality checks, the Applicant has faced the problem of checking the whole, inner and outer, surface of the tyre through optical acquisition of 2D and 3D digital images of the surface and their subsequent processing, for example for detecting the possible presence of defects on, or next to, the surface. The sought defects can for example be irregularities of the, or on the, surface of a tyre (non-vulcanized compound, shape alterations, etc.), structural unevenness, cuts, presence of foreign bodies on the surface, etc.

In particular, the Applicant considers advantageous acquiring and analysing three-dimensional images of the whole, inner and outer, surface of the tyre, in particular high-definition 3D images, preferably obtained with a laser triangulation technique. For example, the analysis of 3D images can be useful for detecting deviations of the three-dimensional shape from the desired shape, deficiencies or protrusions of material on the surface, typically lacks or bubbles, or even some features such as the embossed writings and the knurls.

The Applicant has observed that in order for the check to be used "in line" inside a tyre production plant, it is advisable that the check itself is performed in reduced times, lower than or corresponding to the cycle time, and with low costs and/or encumbrances.

The Applicant has also observed that, in addition to the needed time, a further aspect of fundamental importance for the check of tyres in an industrial context is the overall physical space occupied by the check station, and in particular the encumbrance area in plant (called 'footprint' of the station).

The Applicant has therefore faced the problem of performing a quality check of the tyres with optical acquisition of the 3D images of the inner and outer surface of a tyre by the laser triangulation technique, included the portion of inner surface which are difficult to access such as the inner sidewall or the inner bead or the inner shoulder, with low costs, and in particular with times and physical spaces reduced and compatible with the cycle times of a tyre production line and with the spaces of an industrial context of tyre production as illustrated in WO 2016/088040.

Finally, the Applicant has observed that although the apparatus described in WO 2017/175099 A1, in which the reflecting element is fixed with respect to the rest of the apparatus, can be used for the acquisition of 3D images of portion of both inner and outer surface, however such use would involve a certain complexity of moving in the passage from one acquisition to another, such as for example a complete overturning of the apparatus itself. This in turn could cause a consequent expansion of the overall acquisition times, and/or a difficulty or, in some cases, a practical impossibility for the moving member (e.g. a robotic arm) to make the necessary movements in view of its structure and/or of the physical limits of the space available for the moving of the apparatus.

The Applicant has therefore perceived that by leaving a few more degrees of freedom to the acquisition system of 3D image the problems described above could be solved with the same acquisition system of image respecting space limits and time cycle constraints.

Finally, the Applicant has found that by making movable the reflecting element of the acquisition system of 3D image, it is possible acquiring the 3D images of portions of inner and outer surface of the tyre with the same acquisition apparatus, while maintaining the check apparatus compact and easy to handle in the space.

According to a first aspect the invention relates to a method for checking tyres according to claim 1.

According to a different aspect the invention relates to a station for checking tyres in a tyre production line according to claim 8.

According to a different aspect, which is however not defined by the appended claims, an example relates to an apparatus for the check of tyres as described above.

The Applicant believes that the possibility of positioning the reflecting surface in two different operating positions, in which respectively it does not cross and it crosses the propagation axis and the optical axis, allows on one side inserting the apparatus, with the reflecting element in the first position, inside the tyre for acquiring images of portions of inner surface that are difficult to detect, such as for example the inner shoulder, the inner sidewall, or the inner bead, and on the other side, with the same apparatus with the reflecting element in the second position, acquiring images of portions of outer surface directly illuminated by the laser source and directly caught by the camera, without the interposition of the reflecting element.

The use of the same apparatus replaces the use of two different apparatuses dedicated to the acquisition of images respectively of inner and outer surfaces, which apparatuses would respectively require two distinct moving members with a consequent increase in the overall footprint of the check station (or the need to replace the two apparatuses on the same moving member, with a consequent increase of the acquisition times). Moreover, the possibility of moving the reflecting surface considerably simplifies the moving operations of the apparatus itself in the various acquisition steps of the inner and outer surfaces, and in particular the positioning operations of the apparatus from the acquisition positions of the portions of inner surface to the acquisition positions of portions of outer surface (or vice-versa).

The present invention, in one or more of the aforesaid aspects, can further have one or more of the preferred features herein described.

Preferably said apparatus comprises said acquisition system as the only digital image acquisition system. In other words, the apparatus is only dedicated to the acquisition of three-dimensional images by means of said acquisition system. In this way the apparatus remains overall light and compact, to the advantage of the dual use for the acquisition of the portions of both inner and outer surface.

Preferably said frame comprises a first portion, to which there are rigidly fixed said flange, said camera and said linear laser source, and a second portion, movable with respect to the first portion of the frame, to which it is rigidly fixed said reflecting element. Preferably said moving member has an end moving axis, preferably a rotational moving axis of the apparatus, passing through said flange (preferably perpendicularly to a coupling surface of said flange).

Preferably said first portion of the frame has main development along a first direction. Preferably said first direction is perpendicular to said moving axis. In this way the moving of the apparatus is easy.

Preferably, when the reflecting element is in the first operating position, said second portion of the frame has a main development direction perpendicular to said first direction, even more preferably perpendicular to said moving axis. In this way the conformation of the apparatus advantageously fits to the acquisition, in particular of the inner surface, and the relative moving needs.

Preferably it is provided moving said reflecting element between the first and the second position by rotation about a rotation axis.

Preferably said second portion of the frame is hinged to said first portion of the frame to be able to rotate about a respective rotation axis. According to the Applicant the moving by rotation of the reflecting element has proved to be structurally simple and rapid. Preferably said rotation axis is perpendicular to said first direction and/or to a main development direction of the second portion of the frame. Preferably, when the reflecting element is in the second operating position, said main development direction of the second portion of the frame is parallel to said first direction, even more preferably perpendicular to said moving axis.

Preferably said rotation axis passes through said first portion of the frame, more preferably at an end of the first portion of frame distal to said flange with respect to said first direction. In this way the second portion of frame, together with the reflecting element, moves, with a simple rotation, between the first position of maximum encumbrance and the second position of minimum encumbrance, in which the reflecting element is adjacent to the first portion of frame. In this way the overall encumbrance of the second portion of frame in the second position of the reflecting element is limited. Preferably said rotation axis is perpendicular to said propagation axis of the linear laser beam and/or to said optical axis. In this way a rotation of the second portion of the frame corresponds to a rapid displacement of the reflecting element inside/outside the laser beam (and the optical axis).

Preferably said reflecting element is fixed to a free end of the second portion of frame with respect to the main development direction of the second portion of frame. In this way the apparatus is slender and light and the encumbrances are reduced.

Preferably said first position of the reflecting element is distal from said first portion of the frame.

Preferably said first position of the reflecting element is distal from said camera and/or from said linear laser source.

Preferably said second position of the reflecting element is proximal to said first portion of the frame, even more preferably it is adjacent to said first portion of the frame.

Preferably said second portion of the frame comprises a first part developing from said rotation axis to a free end of the second portion of the frame (e.g. up to said reflecting element) and a second part developing at substantially opposite part of the rotation axis with respect to the first part. In this way a first type lever is formed.

Preferably said first part of the second portion of the frame extends along a main development direction of the second portion of the frame for a main part of (more preferably all) an overall extension of the second portion of frame. In this way to a brief excursion of the second part of the second portion of frame corresponds a wide excursion of the first part, with advantages in terms of displacement rapidity and/or apparatus compactness.

Preferably said actuator is interposed between said first portion and second portion of the frame.

Preferably said actuator has a first portion integral with said first portion of the frame and a second portion, movable with respect to the first portion of the actuator, integral with said second portion of the frame, more preferably integral with said second part of the second portion of the frame.

Preferably said actuator has main development parallel to said first direction. In this way the contribution given by the actuator to the overall encumbrance of the apparatus is limited.

Preferably said actuator is a linear actuator acting along an actuating direction. Preferably said actuating direction is perpendicular to said rotation axis.

Preferably said actuating direction is next (but not incident) to said rotation axis. In this way the rotation of the second portion of the apparatus is achieved according to the principle of the first type lever, wherein the driving force is exerted by the actuator and the resisting force corresponds to the weight of the reflecting element and of the second portion of frame.

Preferably said actuator is a cylinder having a chamber integral with one of the first portion and the second portion of the frame and a piston integral with the other one between the first portion and the second portion of the frame (e.g. the second part of the second frame portion). Preferably said actuator is electric, pneumatic, hydraulic or oil-dynamic, more preferably pneumatic. In this way the moving of the reflecting element is implemented in a structurally simple, light, cheap and with little encumbrance way. The use of an electric actuator allows for example a better management of the different approaching configurations.

Preferably said linear laser source and said camera are mutually placed side by side. This contributes to the overall compactness of the apparatus.

Preferably the apparatus comprises said reflecting element as the only reflecting element. In this way the apparatus is compact and reliable.

Preferably said camera is a matrix camera.

Preferably said matrix camera is capable of acquiring a matrix image of a matrix portion of surface and it comprises a processing unit configured to identify in said matrix image a reflected laser line which represents a laser line generated by the illumination of a linear portion of said respective matrix portion of surface with said linear laser beam. Preferably said processing unit is configured to process by triangulation said reflected laser line to obtain a three-dimensional image containing information relative to an altimetric profile of said linear portion of said matrix portion of surface.

Preferably it is provided providing said apparatus for the check of tyres and said moving member of the apparatus.

Preferably it is provided that the apparatus is mounted onto said moving member to be moved in the space.

Preferably it is provided that the apparatus comprises a frame, a flange fixed to the frame for the connection of said frame to said moving member.

Preferably it is provided that said acquisition system is mounted onto said frame. Preferably it is provided that the apparatus comprises an actuator for moving said reflecting element between the first and the second operating position.

Preferably it is provided moving said apparatus, by means of said moving member of the apparatus, between said acquiring said first three-dimensional image and said acquiring said second three-dimensional image, or vice-versa.

Preferably acquiring said first three-dimensional image comprises inserting at least said reflecting element into an inner cavity of said tyre.

Preferably acquiring said first three-dimensional image comprises rotating said tyre about a rotation axis thereof.

Preferably acquiring said first three-dimensional image comprises acquiring a sequence of matrix images of a respective sequence of matrix portions of inner surface, each matrix portion of inner surface belonging to said portion of inner surface and containing a respective linear portion of inner surface illuminated by said linear laser beam to generate a respective laser line, wherein each matrix image contains a respective reflected laser line which represents said respective laser line.

Preferably acquiring said first three-dimensional image comprises identifying in each matrix image said respective reflected laser line.

Preferably acquiring said first three-dimensional image comprises processing said respective reflected laser line by triangulation to calculate a respective three-dimensional linear image of said respective linear portion of inner surface containing information relative to an altimetric profile of said respective linear portion of inner surface, and to obtain a sequence of first three-dimensional linear images.

Preferably acquiring said first three-dimensional image comprises merging said first three-dimensional linear images to form said first three-dimensional image.

Preferably acquiring said second three-dimensional image comprises positioning said acquisition system outside of said tyre
Preferably acquiring said second three-dimensional image comprises rotating said tyre about a rotation axis thereof.

Preferably acquiring said second three-dimensional image comprises acquiring a sequence of matrix images of a respective sequence of matrix portions of outer surface, each matrix portion of outer surface belonging to said portion of outer surface and containing a respective linear portion of outer surface illuminated by said linear laser beam to generate a respective laser line, wherein each matrix image contains a respective reflected laser line which represents said respective laser line.

Preferably acquiring said second three-dimensional image comprises identifying in each matrix image said respective reflected laser line.

Preferably acquiring said second three-dimensional image comprises processing said respective reflected laser line by triangulation to calculate a respective three-dimensional linear image of said respective linear portion of outer surface containing information relative to an altimetric profile of said respective linear portion of outer surface, and to obtain a sequence of second three-dimensional linear images. Preferably acquiring said second three-dimensional image comprises merging said second three-dimensional linear images to form said second three-dimensional image. The aforesaid laser triangulation technique has proved to be particularly reliable, precise and fast.

Preferably it is provided acquiring one or more further first three-dimensional images of respective one or more further portions of inner surface of said tyre by means of said acquisition system with said reflecting element in the first operating position.

Preferably it is provided acquiring one or more further second three-dimensional images of respective one or more further portions of outer surface of said tyre by means of said acquisition system with said reflecting element in the second operating position.

Preferably said portion of inner surface is a circumferential portion of inner surface.

Preferably each of said one or more further portions of inner surface is a circumferential portion of inner surface.

Preferably said portion of outer surface is a circumferential portion of outer surface. Preferably each of said one or more further portions of outer surface is a circumferential portion of outer surface.

In this way the surface and overall circumferential development is checked.

Preferably said portion of inner surface and/or said one or more further portions of inner surface is/are placed at one or more among: shoulder, sidewall, bead and crown of said tyre. The apparatus with the reflecting element in the first position allows acquiring these portions of inner surface which have high access difficulties in terms of illumination and/or image acquisition.

Preferably said portion of outer surface and/or said one or more further portions of outer surface is/are placed at one or more among: shoulder, sidewall, bead and crown of said tyre. The apparatus with the reflecting element in the second position allows acquiring these portions of outer surface with a limited moving wideness of the apparatus. Preferably said tyre to be checked is arranged lying horizontally on a sidewall. Preferably said support is configured to support the tyre lying on a sidewall.

Preferably the action of inserting at least said reflecting element in an inner cavity of said tyre happens from above.

Preferably said portion of inner surface and possibly said one or more further portions of inner surface, and said portion of outer surface and possibly said one or more further portions of outer surface belong to an upper half-portion of the tyre with respect to a axial middle plane.

Preferably said moving member of the apparatus is a robotic arm.

Preferably said moving member of the apparatus is an anthropomorphic robotic arm.

Preferably said moving member of the apparatus is an anthropomorphic robotic arm with at least five axes.

### Brief description of the drawings

- figure 1 shows a partial and schematic perspective view of an apparatus for checking tyres according to the present invention with the reflecting element in the first operating position;
- figure 2 shows a partial and schematic side view of the apparatus of figure 1 with the reflecting element in the second operating position;
- figure 3 shows a partial and schematic side view of the apparatus of figure 1 from another prospective;
- figure 4 show an upstream view of the apparatus of figure 1;
- figures 5a-5e show schematically and not to scale five respective possible positions of the apparatus of figure 1 during use;
figure 6 shows a partial view of a station for checking tyres.

### Detailed description of some embodiments of the invention

Further features and advantages will greatly come across from the detailed description of some exemplary but not exclusive embodiments of the present invention. This description will be set forth below with reference to the attached figures, provided only for indicative, and therefore not limiting, purposes.

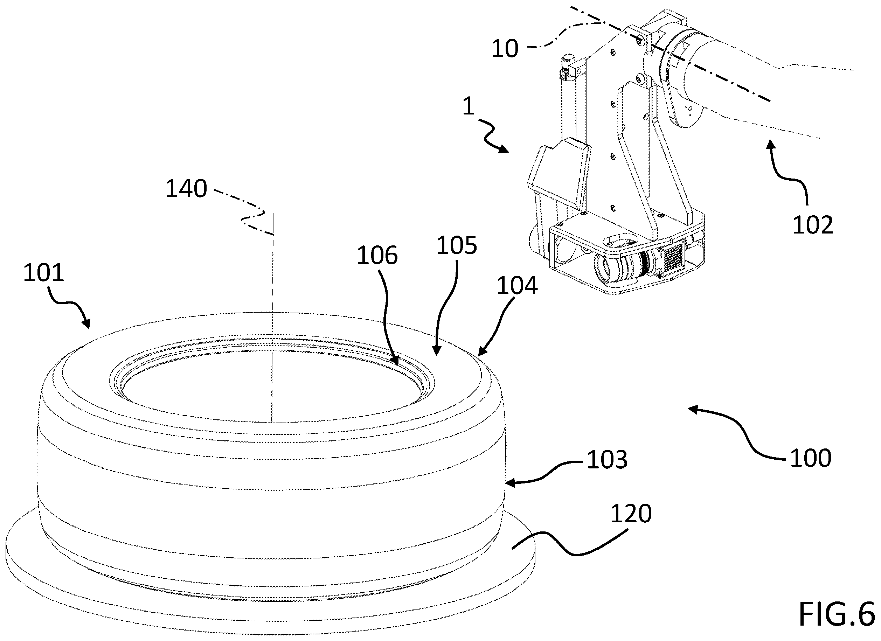

With reference to figure 6, with the reference number 100 a station for checking tyres in a tyre production line is indicated.

Preferably the station comprises a support 120 (e.g. a slewing ring) configured to support the tyre 101 lying horizontally on one side and to rotate the tyre about a rotation axis 140 thereof (preferably vertically arranged).

With the reference 106 the upper bead of the tyre is indicated, with the reference 105 the upper sidewall is indicated, with the reference 104 the upper shoulder is indicated and with the reference 103 the crown portion.

The station 100 comprises an apparatus 1 for the check of tyres.

Preferably the station comprises a moving member 102 (only schematically shown) on which the apparatus 1 is mounted for its moving in the space. Preferably the moving member of the apparatus is a robotic arm. Preferably said moving member is an anthropomorphic robotic arm. Preferably said moving member is an anthropomorphic robotic arm with at least five axes.

The apparatus 1 comprises a frame 2 and a flange 3 integrally fixed to the frame for the connection of the frame itself to the moving member.

The apparatus 1 comprises an acquisition system 4 of three-dimensional images of a surface of the tyre, comprising a, preferably matrix, camera 5 having an optical axis 6, and a linear laser source 7 able to emit a linear laser beam having a propagation plane 8 and a propagation axis 9.

Preferably the acquisition system comprises a reflecting element 11 mounted on said frame and having a reflecting surface 12.

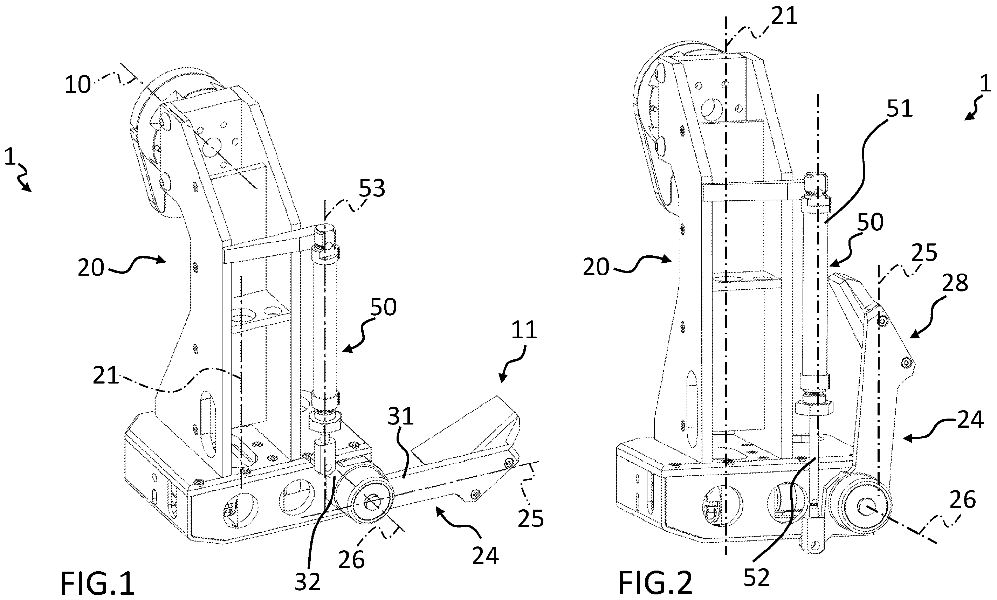

Preferably the apparatus comprises an actuator 50 for moving the reflecting element 11 between a first operating position (shown in figures 1, 3, 4, and 5a-5c) in which the reflecting surface 12 crosses both the propagation axis 9 and the optical axis 6 and a second operating position (shown in figures 2, 5d-5e and 6) in which the reflecting surface 12 does not cross neither the propagation axis 9 nor the optical axis 6. Preferably the apparatus 1 does not comprise further acquisition systems of digital image furtherly to the acquisition system 4.

Preferably the frame comprises a first portion 20, to which there are rigidly fixed the flange 3, the camera 5 and the linear laser source 7, and a second portion 24, movable with respect to the first portion of the frame, to which it is rigidly fixed the reflecting element.

In the figures the reference number 10 indicates the direction of the end moving axis of the robotic arm 102, which exemplarily is a rotational moving axis of the apparatus 1 passing through the flange 3, preferably perpendicularly to a coupling surface 3' of the flange 3.

Preferably the first portion of the frame has main development along a first direction 21, preferably perpendicular to the moving axis 10.

Preferably the second portion 24 of the frame has a main development direction 25 which, when the reflecting element is in the first operating position, is perpendicular to the first direction 21 and perpendicular to the moving axis 10.

Preferably the second portion 24 of the frame is hinged to the first portion of the frame to be able to rotate about a respective rotation axis 26.

Exemplarily the rotation axis 26 is perpendicular to the first direction 21 and to the direction 25. Preferably, when the reflecting element is in the second operating position (figure 2), the direction 25 is parallel to the first direction 21 and perpendicular to the moving axis 10. Preferably the rotation axis 26 passes through the first portion 20 of frame, at an end 23 of the first portion 20 of frame distal to the flange 3 with reference to the first direction 21.

Preferably the reflecting element 11 is fixed to a free end 28 of the second portion 24 of frame.

Preferably the rotation axis 26 is perpendicular to the propagation axis 9 of the linear laser beam and/or to the optical axis 6.

Preferably the first position of the reflecting element 12 is distal from the first portion 20 of the frame, from the camera 5 and from the linear laser source 7.

Preferably the second position of the reflecting element 12 is proximal to the first portion 20 of the frame, more preferably it is adjacent to the first portion 20 of the frame.

Preferably the second portion 24 of the frame comprises a first part 31 (e.g. an elongated arm) extending from the rotation axis 26 to the free end 28 of the second portion 24 of the frame, i.e. to the reflecting element 11, and a second part 32 (e.g. a short lever element) extending from the opposite side of the rotation axis 26 with respect to the first part 31.

Preferably the actuator 50 is interposed between the first 20 and the second portion 24 of the frame. Preferably the actuator 50 has a first portion 51 integral with the first portion 20 of the frame and a second portion 52, movable with respect to the first portion 51, integral with the second part 32 of the second portion 24 of the frame. Preferably the actuator 50 has a main development 53 parallel to the first direction 21. Preferably the actuator 50 is a linear actuator acting along an actuating direction 53 perpendicular to the rotation axis 26 of the second portion 24 of the frame. Preferably the actuating direction 53 is next but not incident to the rotation axis 26.

Exemplarily, as in the illustrated in the example, the actuator 50 is a pneumatic cylinder comprising a chamber (belonging to the first part 51 of the actuator) integral with the first portion 20 of the frame and a piston (belonging to the second part 52 of the actuator) integral with the second portion 24 of the frame (e.g. with the second part 32 of the second portion 24 of frame).

Preferably the linear laser source 7 and the camera 5 are mutually placed side by side and the optical axis 6 and the propagation axis 9 lie, for a first tract proximal respectively to the camera and to the laser source, on a common plane, exemplarily perpendicular to the propagation plane 8.

In a preferred embodiment, such as that shown in figure, there are no further (reflecting or refracting) elements capable of deviating the optical path of the optical axis 6 or of the propagation axis 9 in addition to said reflecting element 11, neither between said reflecting element 11 and respectively the matrix camera 5 and the linear laser source 7, nor downstream of the reflecting element 11 along the propagation direction of the linear laser beam.

Further constructional and/or operational details of the station 100, in particular relating to the acquisition system 4, can be of known type, for example as described in WO 2017/175099 A1.

The method for checking tires of the present invention can be exemplarily implemented using the station 100.

The number and the order of the images acquisitions which follows is purely exemplary. Therefore, the expressions 'first, 'second' and the like do not necessarily imply a corresponding time or space sequence.

A tyre 101 to be checked is arranged horizontally lying on a sidewall above the support 120, which is rotated to rotate the tyre about the rotation axis 140 thereof.

The apparatus 1 for the check of tyres is approached to the tyre by means of the moving member 102.

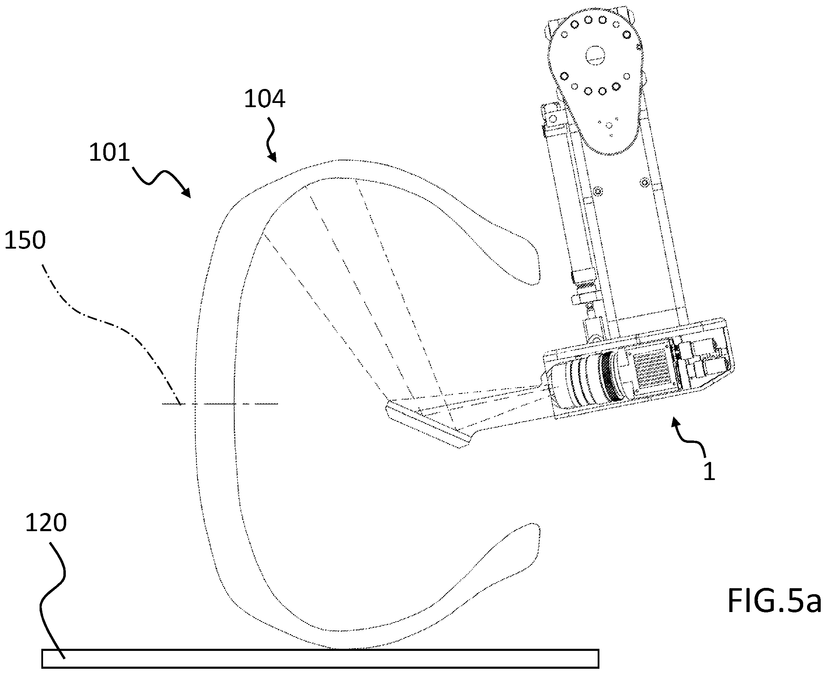

Initially, a first three-dimensional image of a portion of inner surface of the tyre is acquired by means of the acquisition system, with the reflecting element 11 in the first operating position. Exemplarily (fig. 5a) the portion of inner surface is a circumferential portion of inner surface placed at the shoulder 104 and belonging to the upper half-portion of the tyre with respect to the axial middle plane 150.

For this purpose, at least the reflecting element 11 is inserted, lowering it from the above, into the inner cavity of the tyre (figure 5a).

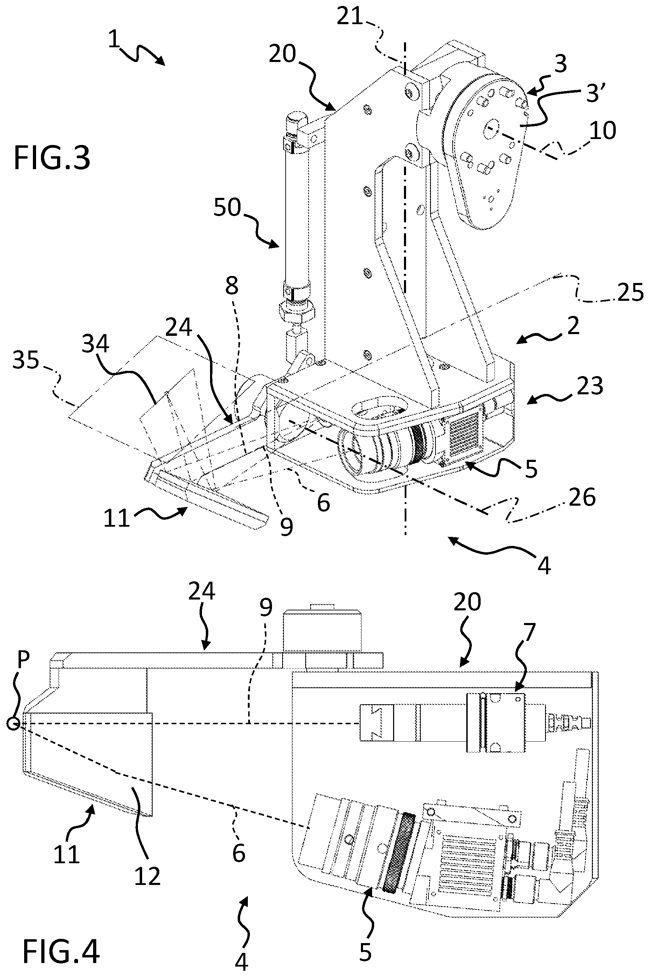

At this point a sequence of matrix images of a respective sequence of matrix portions of inner surface is acquired, each matrix portion of inner surface (indicated purely for illustrative purposes with a portion of plane 35 in figure 3) belonging to the portion of inner surface and containing a respective linear portion of inner surface illuminated by the linear laser beam so as to generate a respective laser line (indicated purely for illustrative purposes with a segment 34 in figure 3), wherein each matrix image contains a respective reflected laser line which represents the respective laser line.

It is therefore provided identifying in each matrix image the respective reflected laser line and elaborating the respective laser line reflected by triangulation for calculating a respective three-dimensional linear image of the respective linear portion of inner surface containing information about an altimetric profile of the respective linear portion of inner surface, in order to obtain a sequence of first three-dimensional linear images. The aforesaid first three-dimensional image is formed by merging the first three-dimensional linear images.

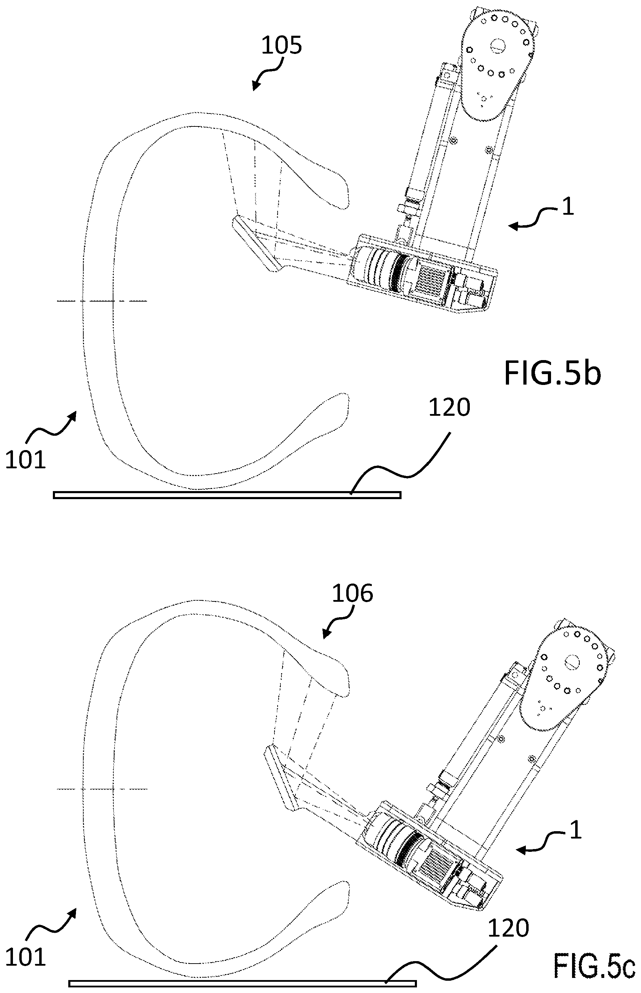

Preferably it is provided moving the apparatus 1 by the moving member of the apparatus 102 and repeating, by the same apparatus 1 with the reflecting element 11 in the first operating position, the aforesaid operations and obtaining a further first three-dimensional image of a further circumferential portion of inner surface placed at the upper sidewall 105 (figure 5b).

Preferably it is provided moving the apparatus 1 by the moving member of the apparatus 102 and repeating, by the same apparatus 1 with the reflecting element 11 in the first operating position, the aforesaid operations and obtaining still a further first three-dimensional image of a still further circumferential portion of inner surface placed at the upper bead 106 (figure 5c). Not illustrated, it can be also provided obtaining a further first three-dimensional image of a further circumferential portion of inner surface placed at the crown 103.

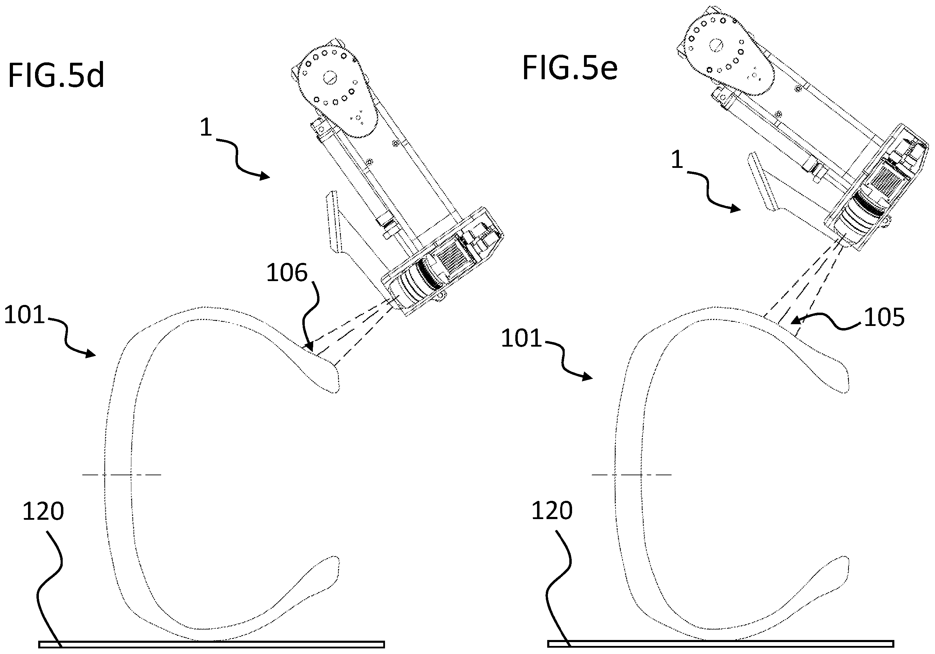

Preferably, it is provided acquiring a second three-dimensional image of a portion of the outer surface of the tyre by means of the acquisition system 4 with the reflecting element 11 in the second operating position (fig. 5d). Exemplarily (fig. 5d) the portion of outer surface is a circumferential portion of outer surface placed at the bead 106 and belonging to the upper half-portion of the tyre.

For this purpose, the apparatus 1 is moved by the moving member 102 in the appropriate position, externally to the tyre, and the reflecting element 11 is retracted by means of the actuator 50 (figure 5d).

At this point, with the tyre rotating, the operations described above with reference to the first three-dimensional image are performed for forming the second three-dimensional image.

Preferably it is provided moving the apparatus 1 by the moving member of the apparatus 102 and repeating, by the same apparatus 1 with the reflecting element in the second operating position, the aforesaid operations and obtaining a further second three-dimensional image of a further circumferential portion of outer surface placed at the upper sidewall 105 (figure 5e). Not illustrated, it can be also provided obtaining a further second three-dimensional image of a further circumferential portion of outer surface placed at the crown 103.

From the above it is understood that the apparatus of the present invention is particularly versatile in the acquiring images both of the inner surface and of the outer surface, in particular at the shoulder, the sidewall, the bead, and the crown, after appropriate moving (translation and/or inclination) of the apparatus by the robotic arm 102 and appropriate moving of the reflecting element 11.

## Claims

1. Method for checking tyres, comprising:
- providing a tyre (101) to be checked;
- providing an acquisition system (4) for the acquisition of three-dimensional images of a surface of said tyre, wherein said acquisition system (4) comprises a camera (5), having an optical axis (6), a linear laser source (7), capable of emitting a linear laser beam having a propagation axis (9), and a reflecting element (11) having a reflecting surface (12);
- acquiring a first three-dimensional image of a portion of inner surface of said tyre by means of said acquisition system (4) with said reflecting element (11) in a first operating position in which said reflecting surface (12) crosses both said propagation axis (9) and said optical axis (6);
**characterized in that** the method further comprises:
- moving said reflecting element (11) between said first operating position and a second operating position in which said reflecting surface (12) does not cross said propagation axis (9) and it does not cross said optical axis (6); and
- acquiring a second three-dimensional image of a portion of outer surface of said tyre by means of said acquisition system (4) with said reflecting element (11) in said second operating position.

2. Method according to claim 1, wherein acquiring said first three-dimensional image comprises:
- inserting at least said reflecting element (11) into an inner cavity of said tyre (101);
- rotating said tyre about a rotation axis (140) thereof;
- acquiring a sequence of matrix images of a respective sequence of matrix portions of inner surface, each matrix portion of inner surface belonging to said portion of inner surface and containing a respective linear portion of inner surface illuminated by said linear laser beam to generate a respective laser line (34), wherein each matrix image contains a respective reflected laser line which represents said respective laser line;
- identifying in each matrix image said respective reflected laser line;
- processing said respective reflected laser line by triangulation to calculate a respective three-dimensional linear image of said respective linear portion of inner surface containing information relative to an altimetric profile of said respective linear portion of inner surface, and to obtain a sequence of first three-dimensional linear images;
- merging said first three-dimensional linear images to form said first three-dimensional image.

3. Method according to claim 1 or 2, wherein acquiring said second three-dimensional image comprises:
- positioning said acquisition system outside of said tyre;
- rotating said tyre (101) about a rotation axis (140) thereof;
- acquiring a sequence of matrix images of a respective sequence of matrix portions of outer surface, each matrix portion of outer surface belonging to said portion of outer surface and containing a respective linear portion of outer surface illuminated by said linear laser beam to generate a respective laser line, wherein each matrix image contains a respective reflected laser line which represents said respective laser line;
- identifying in each matrix image said respective reflected laser line;
- processing said respective reflected laser line by triangulation to calculate a respective three-dimensional linear image of said respective linear portion of outer surface containing information relative to an altimetric profile of said respective linear portion of outer surface, and to obtain a sequence of second three-dimensional linear images;
- merging said second three-dimensional linear images to form said second three-dimensional image.

4. Method according to any one of the previous claims, further comprising:
- acquiring one or more further first three-dimensional images of respective one or more further portions of inner surface of said tyre by means of said acquisition system (4) with said reflecting element (11) in the first operating position; and
- acquiring one or more further second three-dimensional images of respective one or more further portions of outer surface of said tyre by means of said acquisition system (4) with said reflecting element (11) in the second operating position.

5. Method according to claim 4, wherein said portion of inner surface is a circumferential portion of inner surface and/or said portion of outer surface is a circumferential portion of outer surface, wherein said portion of inner surface and/or said one or more further portions of inner surface is/are placed at one or more among: shoulder, sidewall, bead and crown of said tyre, and wherein said portion of outer surface and/or said one or more further portions of outer surface is/are placed at one or more among: shoulder, sidewall, bead and crown of said tyre.

6. Method according to any one of the previous claims, comprising:
- providing an apparatus (1) for the check of tyres and a moving member (102) of the apparatus (1), the apparatus (1) being mounted onto said moving member (102) to be moved in the space, wherein the apparatus (1) comprises a frame (2), a flange (3) fixed to the frame for the connection of said frame to said moving member, said acquisition system (4) mounted onto said frame (2), and wherein the apparatus (1) comprises an actuator (50) for moving said reflecting element (11) between the first and the second operating position;
- moving said apparatus (1) by means of said moving member (102), between said acquiring said first three-dimensional image and said acquiring said second three-dimensional image or vice-versa.

7. Method according to any one of the previous claims, wherein said moving said reflecting element (11) between the first and the second operating position is performed by rotation about a rotation axis (26), and wherein said rotation axis (26) is perpendicular to said propagation axis (9) of the linear laser beam and/or perpendicular to said optical axis (6).

8. Station (100) for checking tyres in a tyre production line, the station comprising;
- a support (120) configured to rotate a tyre (101) about a rotation axis (140) thereof;
- an apparatus (1) for the check of tyres;
- a moving member (102), the apparatus (1) being mounted onto said moving member (102) to be moved in the space,
wherein the apparatus (1) comprises a frame (2), a flange (3) fixed to the frame for the connection of said frame to said moving member and an acquisition system (4) for the acquisition of three-dimensional images of a surface of said tyre, said acquisition system being mounted onto said frame (2) and comprising a camera (5), having an optical axis (6), a linear laser source (7), capable of emitting a linear laser beam having a propagation axis (9), and a reflecting element (11) having a reflecting surface (12), **characterized in that** the apparatus (1) comprises an actuator (50) for moving said reflecting element (11) between a first operating position wherein said reflecting surface (12) crosses both said propagation axis (9) and said optical axis (6) and a second operating position wherein said reflecting surface (12) does not cross said propagation axis (9) and it does not cross said optical axis (6),
wherein, with the reflecting element (11) in said first operating position, the acquisition system (4) is suitable for acquiring images of portions of an inner surface of said tyre, and
wherein, with the reflecting element (11) in said second operating position, the acquisition system (4) is suitable for acquiring images of portions of an outer surface of said tyre directly illuminated by the laser source (7) and directly caught by the camera (5), without the interposition of the reflecting element (11).

9. Station according to claim 8, wherein said apparatus (1) comprises said acquisition system (4) as the only digital image acquisition system.

10. Station according to claim 8 or 9, wherein said frame (2) comprises a first portion (20), to which there are rigidly fixed said flange (3), said camera (5) and said linear laser source (7), and a second portion (24), movable with respect to the first portion (20) of the frame (2), to which it is rigidly fixed said reflecting element (11), wherein said first portion (20) of the frame (2) has main development along a first direction (21).

11. Station according to claim 10, wherein said moving member (102) has an end moving axis (10) passing through said flange (3), wherein said first direction (21) is perpendicular to said end moving axis (10), wherein, when the reflecting element (11) is in the first operating position, said second portion (24) of the frame (2) has a main development direction (25) perpendicular to said first direction and perpendicular to said end moving axis (10), wherein, when the reflecting element (11) is in the second operating position, said main development direction (25) of the second portion (24) of the frame (2) is parallel to said first direction (21) and perpendicular to said end moving axis (10), wherein said second portion (24) of the frame (2) is hinged to said first portion (20) of the frame to be able to rotate about a respective rotation axis (26), and wherein said rotation axis (26) of the second portion (24) of the frame (2) is perpendicular to said first direction (21) and/or perpendicular to a main development direction (25) of the second portion (24) of the frame (2).

12. Station according to claim 11, wherein said rotation axis (26) passes through said first portion (20) of the frame at an end (23) of the first portion (20) of frame distal to said flange (3) with respect to said first direction (21), wherein said rotation axis (26) is perpendicular to said propagation axis (9) of the linear laser beam and/or perpendicular to said optical axis (6), and wherein said second portion (24) of the frame comprises a first part (31) developing from said rotation axis (26) to a free end (28) of the second portion (24) of the frame and a second part (32) developing at substantially opposite part of the rotation axis (26) with respect to the first part (31).

13. Station according to claim 12, wherein said first part (31) of the second portion (24) of the frame extends along a main development direction (25) of the second portion (24) of the frame for a main part of an overall extension of the second portion (24) of frame, wherein said actuator (50) is a linear actuator acting along an actuating direction (53), wherein said actuating direction (53) is perpendicular to said rotation axis (26), wherein said actuating direction (53) is next, and not incident, to said rotation axis (26), wherein said reflecting element (11) is fixed to a free end (28) of the second portion (24) of frame, and wherein said first operating position of the reflecting element (11) is distal to said first portion (20) of the frame, to said camera (5) and/or to said linear laser source (7) and wherein said second operating position of the reflecting element (11) is proximal and adjacent to said first portion (20) of the frame.

14. Station according to any one of the claims from 10 to 13, wherein said actuator (50) is interposed between said first portion (20) and second portion (24) of the frame, wherein said actuator (50) has a first portion (51) integral with said first portion (20) of the frame and a second portion (52), movable with respect to the first portion (51) of the actuator, integral with said second portion (24) of the frame, wherein said actuator (50) has main development parallel to said first direction (21), and wherein said actuator (50) is a pneumatic, hydraulic or oil-dynamic cylinder.

15. Station according to any one of the claims from 8 to 14, wherein the apparatus (1) comprises said reflecting element (11) as the only reflecting element, wherein said camera (5) is a matrix camera capable of acquiring a matrix image of a matrix portion of surface and it comprises a processing unit configured to identify in said matrix image a reflected laser line which represents a laser line generated by the illumination of a linear portion of said respective matrix portion of surface with said linear laser beam and configured to process by triangulation said reflected laser line to obtain a three-dimensional image containing information relative to an altimetric profile of said linear portion of said matrix portion of surface, and wherein said moving member (102) of the apparatus is an anthropomorphic robotic arm with at least five axes.

## Patentansprüche

1. Verfahren zur Prüfung von Reifen, umfassend:
- Bereitstellen eines zu prüfenden Reifens (101);
- Bereitstellen eines Erfassungssystems (4) für die Erfassung von dreidimensionalen Bildern einer Oberfläche des Reifens, wobei das Erfassungssystem (4) eine Kamera (5), die eine optische Achse (6) aufweist, eine lineare Laserquelle (7), die in der Lage ist, einen linearen Laserstrahl, der eine Ausbreitungsachse (9) aufweist, zu emittieren, und ein reflektierendes Element (11) umfasst, das eine reflektierende Oberfläche (12) aufweist;
- Erfassen eines ersten dreidimensionalen Bildes eines Abschnitts der inneren Oberfläche des Reifens mittels des Erfassungssystems (4), wobei sich das reflektierende Element (11) in einer ersten Betriebsposition befindet, in der die reflektierende Oberfläche (12) sowohl die Ausbreitungsachse (9) als auch die optische Achse (6) kreuzt;
**dadurch gekennzeichnet, dass** das Verfahren weiter umfasst:
- Bewegen des reflektierenden Elements (11) zwischen der ersten Betriebsposition und einer zweiten Betriebsposition, in der die reflektierende Oberfläche (12) die Ausbreitungsachse (9) nicht kreuzt und die optische Achse (6) nicht kreuzt; und
- Erfassen eines zweiten dreidimensionalen Bildes eines Abschnitts einer äußeren Oberfläche des Reifens mittels des Erfassungssystems (4), wobei sich das reflektierende Element (11) in der zweiten Betriebsposition befindet.

2. Verfahren nach Anspruch 1, wobei Erfassen des ersten dreidimensionalen Bildes umfasst:
- Einsetzen mindestens des reflektierenden Elements (11) in einen inneren Hohlraum des Reifens (101);
- Drehen des Reifens um eine Drehachse (140) davon;
- Erfassen einer Abfolge von Matrixbildern einer jeweiligen Abfolge von Matrixabschnitten der inneren Oberfläche, wobei jeder Matrixabschnitt der inneren Oberfläche zu dem Abschnitt der inneren Oberfläche gehört und einen jeweiligen linearen Abschnitt der inneren Oberfläche enthält, der von dem linearen Laserstrahl beleuchtet wird, um eine entsprechende Laserlinie (34) zu erzeugen, wobei jedes Matrixbild eine jeweilige reflektierte Laserlinie enthält, die die jeweilige Laserlinie darstellt;
- Identifizieren der jeweiligen reflektierten Laserlinie in jedem Matrixbild;
- Verarbeiten der jeweiligen reflektierten Laserlinie durch Triangulation, um ein jeweiliges dreidimensionales lineares Bild des jeweiligen linearen Abschnitts der inneren Oberfläche zu berechnen, das Informationen bezüglich eines Höhenprofils des jeweiligen linearen Abschnitts der inneren Oberfläche enthält, und um eine Abfolge von ersten dreidimensionalen linearen Bildern zu erhalten;
- Zusammenführen der ersten dreidimensionalen linearen Bilder, um das erste dreidimensionale Bild zu bilden.

3. Verfahren nach Anspruch 1 oder 2, wobei Erfassen des zweiten dreidimensionalen Bildes umfasst:
- Positionieren des Erfassungssystems außerhalb des Reifens;
- Drehen des Reifens (101) um eine Drehachse (140) davon;
- Erfassen einer Abfolge von Matrixbildern einer jeweiligen Abfolge von Matrixabschnitten der äußeren Oberfläche, wobei jeder Matrixabschnitt der äußeren Oberfläche zu dem Abschnitt der äußeren Oberfläche gehört und einen jeweiligen linearen Abschnitt der äußeren Oberfläche enthält, der von dem linearen Laserstrahl beleuchtet wird, um eine entsprechende Laserlinie zu erzeugen, wobei jedes Matrixbild eine jeweilige reflektierte Laserlinie enthält, die die jeweilige Laserlinie darstellt;
- Identifizieren der jeweiligen reflektierten Laserlinie in jedem Matrixbild;
- Verarbeiten der jeweiligen reflektierten Laserlinie durch Triangulation, um ein jeweiliges dreidimensionales lineares Bild des jeweiligen linearen Abschnitts der äußeren Oberfläche zu berechnen, das Informationen bezüglich eines Höhenprofils des jeweiligen linearen Abschnitts der äußeren Oberfläche enthält, und um eine Abfolge von zweiten dreidimensionalen linearen Bildern zu erhalten;
- Zusammenführen der zweiten dreidimensionalen linearen Bilder, um das zweite dreidimensionale Bild zu bilden.

4. Verfahren nach einem der vorstehenden Ansprüche, weiter umfassend:
- Erfassen eines oder mehrerer weiterer erster dreidimensionaler Bilder von jeweils einem oder mehreren weiteren Abschnitten der inneren Oberfläche des Reifens mittels des Erfassungssystems (4), wobei sich das reflektierende Element (11) in der ersten Betriebsposition befindet; und
- Erfassen eines oder mehrerer weiterer zweiter dreidimensionaler Bilder von jeweils einem oder mehreren weiteren Abschnitten der äußeren Oberfläche des Reifens mittels des Erfassungssystems (4), wobei sich das reflektierende Element (11) in der zweiten Betriebsposition befindet.

5. Verfahren nach Anspruch 4, wobei der Abschnitt der inneren Oberfläche ein Umfangsabschnitt der inneren Oberfläche ist und/oder der Abschnitt der äußeren Oberfläche ein Umfangsabschnitt der äußeren Oberfläche ist, wobei der Abschnitt der inneren Oberfläche und/oder der eine oder die mehreren weiteren Abschnitte der inneren Oberfläche an einem oder mehreren angeordnet ist/sind von: Schulter, Seitenwand, Wulst und Krone des Reifens, und wobei der Abschnitt der äußeren Oberfläche und/oder der eine oder die mehreren weiteren Abschnitte der äußeren Oberfläche an einem oder mehreren angeordnet ist/sind von: Schulter, Seitenwand, Wulst und Krone des Reifens.

6. Verfahren nach einem der vorstehenden Ansprüche, umfassend:
- Bereitstellen einer Einrichtung (1) für die Prüfung von Reifen und eines beweglichen Elements (102) der Einrichtung (1), wobei die Einrichtung (1) auf dem beweglichen Element (102) montiert ist, um in dem Raum bewegt zu werden, wobei die Einrichtung (1) einen Rahmen (2), einen Flansch (3), der an dem Rahmen für die Verbindung des Rahmens mit dem beweglichen Element befestigt ist, das Erfassungssystem (4), das an dem Rahmen (2) montiert ist, umfasst, und wobei die Einrichtung (1) eine Betätigungsvorrichtung (50) zum Bewegen des reflektierenden Elements (11) zwischen der ersten und der zweiten Betriebsposition umfasst;
- Bewegen der Einrichtung (1) mittels des beweglichen Elements (102) zwischen dem Erfassen des ersten dreidimensionalen Bildes und dem Erfassen des zweiten dreidimensionalen Bildes oder umgekehrt.

7. Verfahren nach einem der vorstehenden Ansprüche, wobei das Bewegen des reflektierenden Elements (11) zwischen der ersten und der zweiten Betriebsposition durch Drehung um eine Drehachse (26) durchgeführt wird, und wobei die Drehachse (26) senkrecht zu der Ausbreitungsachse (9) des linearen Laserstrahls und/oder senkrecht zu der optischen Achse (6) ist.

8. Station (100) zur Prüfung von Reifen in einer Reifenproduktionslinie, wobei die Station umfasst:
- einen Träger (120), der so konfiguriert ist, dass er einen Reifen (101) um eine Drehachse (140) davon dreht;
- eine Einrichtung (1) für die Prüfung von Reifen;
- ein bewegliches Element (102), wobei die Einrichtung (1) auf dem beweglichen Element (102) montiert ist, um in dem Raum bewegt zu werden,
wobei die Einrichtung (1) einen Rahmen (2), einen Flansch (3), der an dem Rahmen für die Verbindung des Rahmens mit dem beweglichen Element befestigt ist, und ein Erfassungssystem (4) für die Erfassung von dreidimensionalen Bildern einer Oberfläche des Reifens umfasst, wobei das Erfassungssystem an dem Rahmen (2) montiert ist und eine Kamera (5), die eine optische Achse (6) aufweist, eine lineare Laserquelle (7), die in der Lage ist, einen linearen Laserstrahl zu emittieren, der eine Ausbreitungsachse (9) aufweist, und ein reflektierendes Element (11) umfasst, das eine reflektierende Oberfläche (12) aufweist, **dadurch gekennzeichnet, dass** die Einrichtung (1) eine Betätigungsvorrichtung (50) zum Bewegen des reflektierenden Elements (11) zwischen einer ersten Betriebsposition, in der die reflektierende Oberfläche (12) sowohl die Ausbreitungsachse (9) als auch die optische Achse (6) kreuzt, und einer zweiten Betriebsposition, in der die reflektierende Oberfläche (12) die Ausbreitungsachse (9) nicht kreuzt und die optische Achse (6) nicht kreuzt, umfasst,
wobei, wenn sich das reflektierende Element (11) in der ersten Betriebsposition befindet, das Erfassungssystem (4) geeignet ist, Bilder von Abschnitten einer inneren Oberfläche des Reifens zu erfassen, und
wobei, wenn sich das reflektierende Element (11) in der zweiten Betriebsposition befindet, das Erfassungssystem (4) geeignet ist, Bilder von Abschnitten einer äußeren Oberfläche des Reifens zu erfassen, die direkt von der Laserquelle (7) beleuchtet und direkt von der Kamera (5) aufgenommen werden, ohne die Zwischenschaltung des reflektierenden Elements (11).

9. Station nach Anspruch 8, wobei die Einrichtung (1) das Erfassungssystem (4) als das einzige digitale Bilderfassungssystem umfasst.

10. Station nach Anspruch 8 oder 9, wobei der Rahmen (2) einen ersten Abschnitt (20), an dem der Flansch (3), die Kamera (5) und die lineare Laserquelle (7) starr befestigt sind, und einen zweiten Abschnitt (24) umfasst, der in Bezug auf den ersten Abschnitt (20) des Rahmens (2) beweglich ist, an dem das reflektierende Element (11) starr befestigt ist, wobei der erste Abschnitt (20) des Rahmens (2) eine Hauptentwicklung entlang einer ersten Richtung (21) aufweist.

11. Station nach Anspruch 10, wobei das bewegliche Element (102) eine Endbewegungsachse (10) aufweist, die durch den Flansch (3) verläuft, wobei die erste Richtung (21) senkrecht zu der Endbewegungsachse (10) ist, wobei, wenn das reflektierende Element (11) in der ersten Betriebsposition ist, der zweite Abschnitt (24) des Rahmens (2) eine Hauptentwicklungsrichtung (25) senkrecht zu der ersten Richtung und senkrecht zu der Endbewegungsachse (10) aufweist, wobei, wenn das reflektierende Element (11) in der zweiten Betriebsposition ist, die Hauptentwicklungsrichtung (25) des zweiten Abschnitts (24) des Rahmens (2) parallel zu der ersten Richtung (21) und senkrecht zu der Endbewegungsachse (10) ist, wobei der zweite Abschnitt (24) des Rahmens (2) mit dem ersten Abschnitt (20) des Rahmens gelenkig verbunden ist, um sich um eine jeweilige Drehachse (26) drehen zu können, und wobei die Drehachse (26) des zweiten Abschnitts (24) des Rahmens (2) senkrecht zu der ersten Richtung (21) und/oder senkrecht zu einer Hauptentwicklungsrichtung (25) des zweiten Abschnitts (24) des Rahmens (2) ist.

12. Station nach Anspruch 11, wobei die Drehachse (26) durch den ersten Abschnitt (20) des Rahmens an einem Ende (23) des ersten Abschnitts (20) des Rahmens distal zu dem Flansch (3) in Bezug auf die erste Richtung (21) verläuft, wobei die Drehachse (26) senkrecht zu der Ausbreitungsachse (9) des linearen Laserstrahls und/oder senkrecht zu der optischen Achse (6) ist, und wobei der zweite Abschnitt (24) des Rahmens einen ersten Teil (31), der sich von der Drehachse (26) zu einem freien Ende (28) des zweiten Abschnitts (24) des Rahmens erstreckt, und einen zweiten Teil (32) umfasst, der sich in einem im Wesentlichen entgegengesetzten Teil der Drehachse (26) in Bezug auf den ersten Teil (31) erstreckt.

13. Station nach Anspruch 12, wobei sich der erste Teil (31) des zweiten Abschnitts (24) des Rahmens für einen Hauptteil einer Gesamtausdehnung des zweiten Abschnitts (24) des Rahmens entlang einer Hauptentwicklungsrichtung (25) des zweiten Abschnitts (24) des Rahmens erstreckt, wobei die Betätigungsvorrichtung (50) eine lineare Betätigungsvorrichtung ist, die entlang einer Betätigungsrichtung (53) wirkt, wobei die Betätigungsrichtung (53) senkrecht zu der Drehachse (26) ist, wobei die Betätigungsrichtung (53) neben der Drehachse (26) liegt und nicht auf diese trifft, wobei das reflektierende Element (11) an einem freien Ende (28) des zweiten Abschnitts (24) des Rahmens befestigt ist, und wobei die erste Betriebsposition des reflektierenden Elements (11) distal zu dem ersten Abschnitt (20) des Rahmens, zu der Kamera (5) und/oder zu der linearen Laserquelle (7) ist und wobei die zweite Betriebsposition des reflektierenden Elements (11) proximal zu dem ersten Abschnitt (20) des Rahmens und daran angrenzend ist.

14. Station nach einem der Ansprüche 10 bis 13, wobei die Betätigungsvorrichtung (50) zwischen dem ersten Abschnitt (20) und dem zweiten Abschnitt (24) des Rahmens eingefügt ist, wobei die Betätigungsvorrichtung (50) einen ersten Abschnitt (51) einstückig mit dem ersten Abschnitt (20) des Rahmens und einen zweiten Abschnitt (52), der in Bezug auf den ersten Abschnitt (51) der Betätigungsvorrichtung beweglich ist, einstückig mit dem zweiten Abschnitt (24) des Rahmens aufweist, wobei die Betätigungsvorrichtung (50) eine Hauptentwicklung parallel zu der ersten Richtung (21) aufweist, und wobei die Betätigungsvorrichtung (50) ein pneumatischer, hydraulischer oder öldynamischer Zylinder ist.

15. Station nach einem der Ansprüche 8 bis 14, wobei die Einrichtung (1) das reflektierende Element (11) als das einzige reflektierende Element umfasst, wobei die Kamera (5) eine Matrixkamera ist, die in der Lage ist, ein Matrixbild eines Matrixabschnitts einer Oberfläche zu erfassen, und sie eine Verarbeitungseinheit umfasst, die so konfiguriert ist, dass sie in dem Matrixbild eine reflektierte Laserlinie identifiziert, die eine Laserlinie darstellt, die durch die Beleuchtung eines linearen Abschnitts des jeweiligen Matrixabschnitts der Oberfläche mit dem linearen Laserstrahl erzeugt wird, und die so konfiguriert ist, dass sie durch Triangulation die reflektierte Laserlinie verarbeitet, um ein dreidimensionales Bild zu erhalten, das Informationen bezüglich eines Höhenprofils des linearen Abschnitts des Matrixabschnitts der Oberfläche enthält, und wobei das bewegliche Element (102) der Einrichtung ein anthropomorpher Roboterarm mit mindestens fünf Achsen ist.

## Revendications

1. Procédé de vérification de pneus, comprenant :
- la fourniture d'un pneu (101) à vérifier ;
- la fourniture d'un système d'acquisition (4) pour l'acquisition d'images tridimensionnelles d'une surface dudit pneu, dans lequel ledit système d'acquisition (4) comprend une caméra (5), présentant un axe optique (6), une source laser linéaire (7), capable d'émettre un faisceau laser linéaire présentant un axe de propagation (9), et un élément réfléchissant (11) présentant une surface réfléchissante (12) ;
- l'acquisition d'une première image tridimensionnelle d'une portion de la surface intérieure dudit pneu au moyen dudit système d'acquisition (4) avec ledit élément réfléchissant (11) dans une première position de fonctionnement dans laquelle ladite surface réfléchissante (12) croise à la fois ledit axe de propagation (9) et ledit axe optique (6) ;
**caractérisé en ce que** le procédé comprend en outre :
- le déplacement dudit élément réfléchissant (11) entre ladite première position de fonctionnement et une seconde position de fonctionnement dans laquelle ladite surface réfléchissante (12) ne croise pas ledit axe de propagation (9) et ne croise pas ledit axe optique (6) ; et
- l'acquisition d'une seconde image tridimensionnelle d'une portion de la surface extérieure dudit pneu au moyen dudit système d'acquisition (4) avec ledit élément réfléchissant (11) dans ladite seconde position de fonctionnement.

2. Procédé selon la revendication 1, dans lequel l'acquisition de ladite première image tridimensionnelle comprend :
- l'insertion d'au moins ledit élément réfléchissant (11) dans une cavité intérieure dudit pneu (101) ;
- la rotation dudit pneu autour d'un axe de rotation (140) de celui-ci ;
- l'acquisition d'une séquence d'images matricielles d'une séquence respective de portions matricielles de la surface intérieure, chaque portion matricielle de la surface intérieure appartenant à ladite portion de la surface intérieure et contenant une portion linéaire respective de la surface intérieure illuminée par ledit faisceau laser linéaire pour générer une ligne laser respective (34), dans lequel chaque image matricielle contient une ligne laser réfléchie respective qui représente ladite ligne laser respective ;
- l'identification, dans chaque image matricielle, de ladite ligne laser réfléchie respective ;
- le traitement de ladite ligne laser réfléchie respective par triangulation pour calculer une image linéaire tridimensionnelle respective de ladite portion linéaire respective de la surface intérieure contenant des informations relatives à un profil altimétrique de ladite portion linéaire respective de la surface intérieure, et pour obtenir une séquence de premières images linéaires tridimensionnelles ;
- la fusion desdites premières images linéaires tridimensionnelles pour former ladite première image tridimensionnelle.

3. Procédé selon la revendication 1 ou 2, dans lequel l'acquisition de ladite seconde image tridimensionnelle comprend :
- le positionnement dudit système d'acquisition à l'extérieur dudit pneu ;
- la rotation dudit pneu (101) autour d'un axe de rotation (140) de celui-ci ;
- l'acquisition d'une séquence d'images matricielles d'une séquence respective de portions matricielles de la surface extérieure, chaque portion matricielle de la surface extérieure appartenant à ladite portion de la surface extérieure et contenant une portion linéaire respective de la surface extérieure illuminée par ledit faisceau laser linéaire pour générer une ligne laser respective, dans lequel chaque image matricielle contient une ligne laser réfléchie respective qui représente ladite ligne laser respective ;
- l'identification, dans chaque image matricielle, de ladite ligne laser réfléchie respective ;
- le traitement de ladite ligne laser réfléchie respective par triangulation pour calculer une image linéaire tridimensionnelle respective de ladite portion linéaire respective de la surface extérieure contenant des informations relatives à un profil altimétrique de ladite portion linéaire respective de la surface extérieure, et pour obtenir une séquence de secondes images linéaires tridimensionnelles ;
- la fusion desdites secondes images linéaires tridimensionnelles pour former ladite seconde image tridimensionnelle.

4. Procédé selon l'une quelconque des revendications précédentes, comprenant en outre :
- l'acquisition d'une ou plusieurs autres premières images tridimensionnelles d'une ou plusieurs autres portions respectives de la surface intérieure dudit pneu au moyen dudit système d'acquisition (4) avec ledit élément réfléchissant (11) dans la première position de fonctionnement ; et
- l'acquisition d'une ou plusieurs autres secondes images tridimensionnelles d'une ou plusieurs autres portions respectives de la surface extérieure dudit pneu au moyen dudit système d'acquisition (4) avec ledit élément réfléchissant (11) dans la seconde position de fonctionnement.

5. Procédé selon la revendication 4, dans lequel ladite portion de la surface intérieure est une portion circonférentielle de la surface intérieure et/ou ladite portion de la surface extérieure est une portion circonférentielle de la surface extérieure, dans lequel ladite portion de la surface intérieure et/ou lesdites une ou plusieurs autres portions de la surface intérieure est/sont placée(s) sur un ou plusieurs parmi : l'épaulement, la paroi latérale, le talon et la couronne dudit pneu, et dans lequel ladite portion de la surface extérieure et/ou lesdites une ou plusieurs autres portions de la surface extérieure est/sont placée(s) sur un ou plusieurs parmi : l'épaulement, la paroi latérale, le talon et la couronne dudit pneu.

6. Procédé selon l'une quelconque des revendications précédentes, comprenant :
- la fourniture d'un appareil (1) pour la vérification de pneus et d'un élément mobile (102) de l'appareil (1), l'appareil (1) étant monté sur ledit élément mobile (102) pour être déplacé dans l'espace, dans lequel l'appareil (1) comprend un châssis (2), une bride (3) fixée au châssis pour la connexion dudit châssis audit élément mobile, ledit système d'acquisition (4) monté sur ledit châssis (2), et dans lequel l'appareil (1) comprend un actionneur (50) pour déplacer ledit élément réfléchissant (11) entre la première et la seconde position de fonctionnement ;
- le déplacement dudit appareil (1) au moyen dudit élément mobile (102), entre ladite acquisition de ladite première image tridimensionnelle et ladite acquisition de ladite seconde image tridimensionnelle ou vice versa.

7. Procédé selon l'une quelconque des revendications précédentes, dans lequel ledit déplacement dudit élément réfléchissant (11) entre la première et la seconde position de fonctionnement est effectué par rotation autour d'un axe de rotation (26), et dans lequel ledit axe de rotation (26) est perpendiculaire audit axe de propagation (9) du faisceau laser linéaire et/ou perpendiculaire audit axe optique (6).

8. Station (100) de vérification de pneus dans une ligne de production de pneus, la station comprenant :
- un support (120) configuré pour faire tourner un pneu (101) autour d'un axe de rotation (140) de celui-ci ;
- un appareil (1) pour la vérification de pneus ;
- un élément mobile (102), l'appareil (1) étant monté sur ledit élément mobile (102) pour être déplacé dans l'espace,
dans laquelle l'appareil (1) comprend un châssis (2), une bride (3) fixée au châssis pour la connexion dudit châssis audit élément mobile et un système d'acquisition (4) pour l'acquisition d'images tridimensionnelles d'une surface dudit pneu, ledit système d'acquisition étant monté sur ledit châssis (2) et comprenant une caméra (5), présentant un axe optique (6), une source laser linéaire (7), capable d'émettre un faisceau laser linéaire présentant un axe de propagation (9), et un élément réfléchissant (11) présentant une surface réfléchissante (12), **caractérisée en ce que** l'appareil (1) comprend un actionneur (50) pour déplacer ledit élément réfléchissant (11) entre une première position de fonctionnement dans laquelle ladite surface réfléchissante (12) croise à la fois ledit axe de propagation (9) et ledit axe optique (6) et une seconde position de fonctionnement dans laquelle ladite surface réfléchissante (12) ne croise pas ledit axe de propagation (9) et ne croise pas ledit axe optique (6),
dans laquelle, avec l'élément réfléchissant (11) dans ladite première position de fonctionnement, le système d'acquisition (4) est adapté à l'acquisition d'images de portions d'une surface intérieure dudit pneu, et
dans laquelle, avec l'élément réfléchissant (11) dans ladite seconde position de fonctionnement, le système d'acquisition (4) est adapté à l'acquisition d'images de portions d'une surface extérieure dudit pneu directement illuminées par la source laser (7) et directement capturées par la caméra (5), sans l'interposition de l'élément réfléchissant (11).

9. Station selon la revendication 8, dans laquelle ledit appareil (1) comprend ledit système d'acquisition (4) comme seul système d'acquisition d'images numériques.

10. Station selon la revendication 8 ou 9, dans laquelle ledit châssis (2) comprend une première portion (20), à laquelle sont fixés rigidement ladite bride (3), ladite caméra (5) et ladite source laser linéaire (7), et une seconde portion (24), mobile par rapport à la première portion (20) du châssis (2), à laquelle est fixé rigidement ledit élément réfléchissant (11), dans laquelle ladite première portion (20) du châssis (2) présente un développement principal le long d'une première direction (21).

11. Station selon la revendication 10, dans laquelle ledit élément mobile (102) présente un axe de déplacement à l'extrémité (10) passant par ladite bride (3), dans laquelle ladite première direction (21) est perpendiculaire audit axe de déplacement à l'extrémité (10), dans laquelle, lorsque l'élément réfléchissant (11) est en première position de fonctionnement, ladite seconde portion (24) du châssis (2) présente une direction de développement principale (25) perpendiculaire à ladite première direction et perpendiculaire audit axe de déplacement à l'extrémité (10), dans laquelle, lorsque l'élément réfléchissant (11) est en seconde position de fonctionnement, ladite direction de développement principale (25) de la seconde portion (24) du châssis (2) est parallèle à ladite première direction (21) et perpendiculaire audit axe de déplacement à l'extrémité (10), dans laquelle ladite seconde portion (24) du châssis (2) est articulée à ladite première portion (20) du châssis pour pouvoir tourner autour d'un axe de rotation respectif (26), et dans laquelle ledit axe de rotation (26) de la seconde portion (24) du châssis (2) est perpendiculaire à ladite première direction (21) et/ou perpendiculaire à une direction de développement principale (25) de la seconde portion (24) du châssis (2).

12. Station selon la revendication 11, dans laquelle ledit axe de rotation (26) traverse ladite première portion (20) du châssis à une extrémité (23) de la première portion (20) du châssis distale à ladite bride (3) par rapport à ladite première direction (21), dans laquelle ledit axe de rotation (26) est perpendiculaire audit axe de propagation (9) du faisceau laser linéaire et/ou perpendiculaire audit axe optique (6), et dans laquelle ladite seconde portion (24) du châssis comprend une première partie (31) s'étendant dudit axe de rotation (26) jusqu'à une extrémité libre (28) de la seconde portion (24) du châssis et une seconde partie (32) s'étendant à une partie sensiblement opposée de l'axe de rotation (26) par rapport à la première partie (31).

13. Station selon la revendication 12, dans laquelle ladite première partie (31) de la seconde portion (24) du châssis s'étend le long d'une direction de développement principale (25) de la seconde portion (24) du châssis pour une partie principale de l'extension globale de la seconde portion (24) du châssis, dans laquelle ledit actionneur (50) est un actionneur linéaire agissant le long d'une direction d'actionnement (53), dans laquelle ladite direction d'actionnement (53) est perpendiculaire audit axe de rotation (26), dans laquelle ladite direction d'actionnement (53) est adjacente, sans être incidente, audit axe de rotation (26), dans laquelle ledit élément réfléchissant (11) est fixé à une extrémité libre (28) de la seconde portion (24) du châssis, et dans laquelle ladite première position de fonctionnement de l'élément réfléchissant (11) est distale par rapport à ladite première portion (20) du châssis, à ladite caméra (5) et/ou à ladite source laser linéaire (7), et dans laquelle ladite seconde position de fonctionnement de l'élément réfléchissant (11) est proximale et adjacente à ladite première portion (20) du châssis.

14. Station selon l'une quelconque des revendications 10 à 13, dans laquelle ledit actionneur (50) est interposé entre ladite première portion (20) et ladite seconde portion (24) du châssis, dans laquelle ledit actionneur (50) présente une première portion (51) solidaire de ladite première portion (20) du châssis et une seconde portion (52), mobile par rapport à la première portion (51) de l'actionneur, solidaire de ladite seconde portion (24) du châssis, dans laquelle ledit actionneur (50) présente un développement principal parallèle à ladite première direction (21), et dans laquelle ledit actionneur (50) est un cylindre pneumatique, hydraulique ou oléodynamique.

15. Station selon l'une quelconque des revendications 8 à 14, dans laquelle l'appareil (1) comprend ledit élément réfléchissant (11) comme seul élément réfléchissant, dans laquelle ladite caméra (5) est une caméra matricielle capable d'acquérir une image matricielle d'une portion matricielle de surface et elle comprend une unité de traitement configurée pour identifier dans ladite image matricielle une ligne laser réfléchie qui représente une ligne laser générée par l'illumination d'une portion linéaire de ladite portion matricielle respective de surface avec ledit faisceau laser linéaire et configurée pour traiter par triangulation ladite ligne laser réfléchie pour obtenir une image tridimensionnelle contenant des informations relatives à un profil altimétrique de ladite portion linéaire de ladite portion matricielle de surface, et dans laquelle ledit élément mobile (102) de l'appareil est un bras robotique anthropomorphe avec au moins cinq axes.
